(19) Europäisches Patentamt / European Patent Office / Office européen des brevets

(11) **EP 2 981 085 A1**

(12) **EUROPEAN PATENT APPLICATION**
published in accordance with Art. 153(4) EPC

(43) Date of publication:
**03.02.2016 Bulletin 2016/05**

(51) Int Cl.:
**H04N 19/12** *(2014.01)* **H04N 19/136** *(2014.01)*
**H04N 19/176** *(2014.01)* **H04N 19/61** *(2014.01)*

(21) Application number: **14775162.2**

(22) Date of filing: **25.03.2014**

(86) International application number:
**PCT/JP2014/058231**

(87) International publication number:
**WO 2014/157172 (02.10.2014 Gazette 2014/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **28.03.2013 JP 2013070235**

(71) Applicant: **KDDI Corporation
Tokyo 160-0023 (JP)**

(72) Inventors:
• **KAWAMURA, Kei
Fujimino-shi
Saitama 356-8502 (JP)**
• **NAITO, Sei
Fujimino-shi
Saitama 356-8502 (JP)**

(74) Representative: **Reeve, Nicholas Edward
Reddie & Grose LLP
16 Theobalds Road
London WC1X 8PL (GB)**

(54) **DYNAMIC-IMAGE CODING DEVICE, DYNAMIC-IMAGE DECODING DEVICE, DYNAMIC-IMAGE CODING METHOD, DYNAMIC-IMAGE DECODING METHOD, AND PROGRAM**

(57) A video encoding apparatus AA encodes an input image a having three color components each having the same color spatial resolution. The video encoding apparatus AA performs color space conversion by applying a transformation coefficient to a residual signal which represents a difference between the input image a and a predicted image generated by intra frame prediction or otherwise inter frame prediction, so as to generate a residual signal in an uncorrelated space. Such an arrangement provides a hardware-friendly configuration with a reduced processing load and with reduced redundancy in the color space.

FIG. 1

**Description**

<u>Technical Field</u>

The present invention relates to a video encoding apparatus, a video decoding apparatus, a video encoding method, a video decoding method, and a computer program.

<u>Background Art</u>

A video coding method using intra prediction (intra frame prediction), inter prediction (inter frame prediction), and residual transform has been proposed (see the papers entitled ISO/IEC 14496-10 - MPEG-4 Part 10, "Advanced Video Coding", and JCTVC-L1003, High efficiency video coding (HEVC) text specification draft 10 (for FDIS & Consent) for example).

<u>Configuration and operation of video encoding apparatus MM</u>

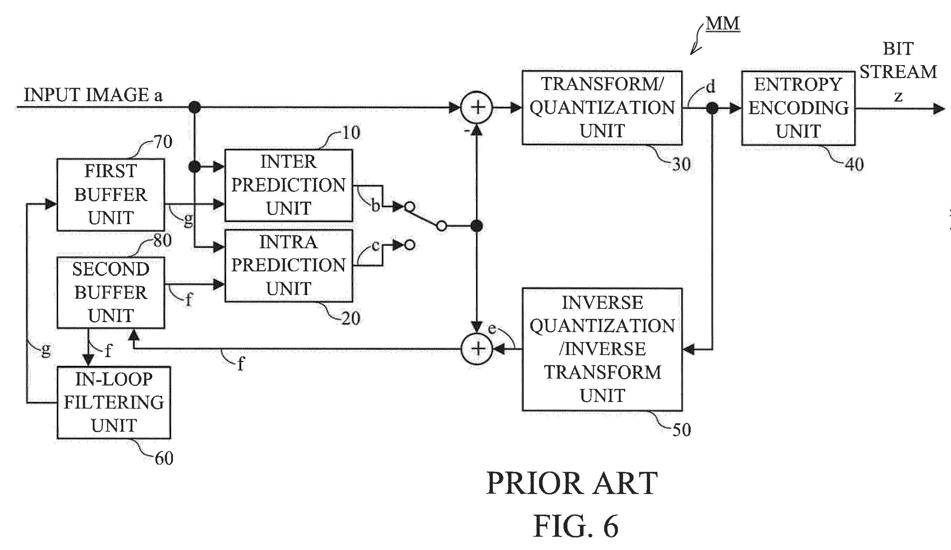

Fig. 6 is a block diagram showing a video encoding apparatus MM according to a conventional example configured to encode a video using the aforementioned video coding method. The video encoding apparatus MM includes an inter prediction unit 10, an intra prediction unit 20, a transform/quantization unit 30, an entropy encoding unit 40, an inverse quantization/inverse transform unit 50, an in-loop filtering unit 60, a first buffer unit 70, and a second buffer unit 80.

The inter prediction unit 10 receives, as its input data, an input image a and a local decoded image g supplied from the first buffer unit 70 as described later. The inter prediction unit 10 performs inter prediction based on the input images so as to generate and output an inter predicted image b.

The intra prediction unit 20 receives, as its input data, the input image a and a local decoded image f supplied from the second buffer unit 80 as described later. The intra prediction unit 20 performs intra prediction based on the input images so as to generate and output an intra predicted image c.

The transform/quantization unit 30 receives, as its input data, the input image a and an error (residual) signal which represents a difference between the input image a and the inter predicted image b or otherwise the intra predicted image c. The transform/quantization unit 30 transforms and quantizes the residual signal thus input so as to generate and output a quantized coefficient d.

The entropy encoding unit 40 receives, as its input data, the quantized coefficient d and unshown side information. The entropy encoding unit 40 performs entropy encoding of the input signal, and outputs the signal thus entropy encoded as a bit stream z.

The inverse quantization/inverse transform unit 50 receives the quantized coefficient d as its input data. The inverse quantization/inverse transform unit 50 performs inverse quantization and inverse transform processing on the quantized coefficient d so as to generate and output a residual signal e thus inverse transformed.

The second buffer unit 80 stores the local decoded image f, and supplies the local decoded image f thus stored to the intra prediction unit 20 and the in-loop filtering unit 60 at an appropriate timing. The local decoded image f is configured as a signal obtained by making the sum of the residual signal e thus inverse transformed and the inter predicted image b or otherwise the intra predicted image c.

The in-loop filtering unit 60 receives the local decoded image f as its input data. The in-loop filtering unit 60 applies filtering such as deblock filtering or the like to the local decoded image f so as to generate and output a local decoded image g.

The first buffer unit 70 stores the local decoded image g, and supplies the local decoded image g thus stored to the inter prediction unit 10 at an appropriate timing.

<u>Configuration and operation of video decoding apparatus NN</u>

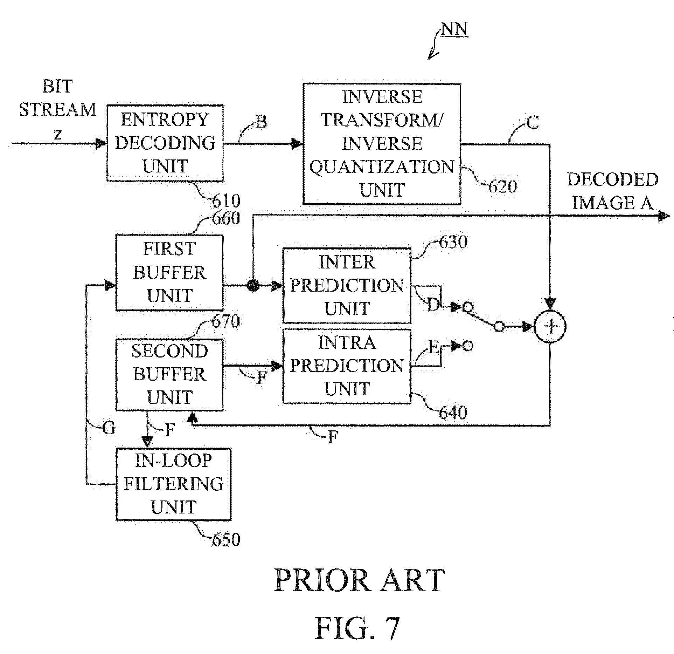

Fig. 7 is a block diagram showing a video decoding apparatus NN according to a conventional example, configured to decode a video based on the bit stream z generated by the video encoding apparatus MM. The video decoding apparatus NN comprises an entropy decoding unit 610, an inverse transform/inverse quantization unit 620, an inter prediction unit 630, an intra prediction unit 640, an in-loop filtering unit 650, a first buffer unit 660, and a second buffer unit 670.

The entropy decoding unit 610 receives the bit stream z as its input data. The entropy decoding unit 610 performs entropy decoding of the bit stream z so as to generate and output a quantized coefficient B.

The inverse transform/inverse quantization unit 620, the inter prediction unit 630, the intra prediction unit 640, the in-loop filtering unit 650, the first buffer unit 660, and the second buffer unit 670 respectively operate in the same manner as the inverse quantization/inverse transform unit 50, the inter prediction unit 10, the intra prediction unit 20, the in-loop filtering unit 60, the first buffer unit 70, and the second buffer unit 80 shown in Fig. 6.

With the video encoding apparatus MM and the video decoding apparatus NN, intra prediction, transform processing, and quantization are performed so as to reduce spatial redundancy. Furthermore, inter prediction is performed, which allows temporal redundancy to be reduced. However, with the video encoding apparatus MM and the video decoding apparatus NN, signal processing is performed separately for each color component. With such an arrangement, correlation in the color space cannot be sufficiently reduced. Thus, in some cases, such an arrangement is incapable of sufficiently reducing redundancy.

In the RGB color space, there is a very high correlation between color components. In contrast, in the YUV color space and in the YCbCr color space, there is a low correlation between color components. Thus, in many cases, an image configured in the YUV color space or YCbCr color space is employed as an input image for the video encoding apparatus.

Also, a method for reducing redundancy in a color space has been proposed (see H. Kato, et al., "Adaptive Color Conversion Method based on Coding Parameters of H.264/MPEG-4 AVC"., for example). This method has the following features. First, color space conversion is performed in units of blocks. Second, a color space transformation matrix is derived based on a singular value decomposition algorithm using encoded reference pixels. Third, intra prediction and inter prediction are performed for the color space after the color space conversion is performed.

Configuration and operation of video encoding apparatus PP

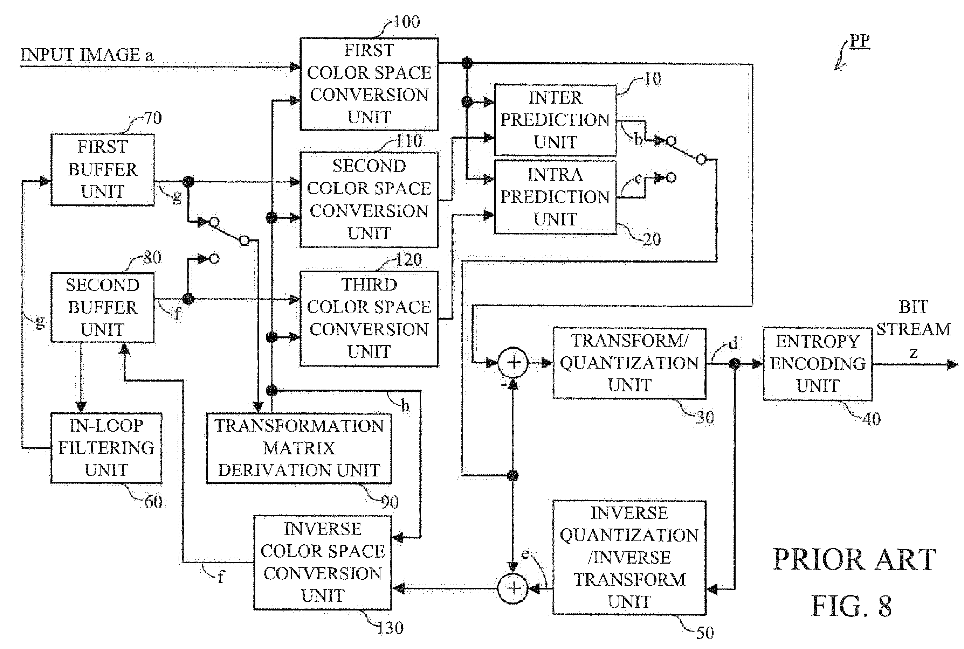

Fig. 8 is a block diagram showing a video encoding apparatus PP according to a conventional example, employing the aforementioned method for reducing redundancy in the color space. The video encoding apparatus PP has the same configuration as that of the video encoding apparatus MM according to a conventional example shown in Fig. 6 except that the video encoding apparatus PP further includes a transformation matrix derivation unit 90, a first color space conversion unit 100, a second color space conversion unit 110, a third color space conversion unit 120, and an inverse color space conversion unit 130. It should be noted that, in the description of the video encoding apparatus PP, the same components as those of the video encoding apparatus MM are denoted by the same reference symbols, and description thereof will be omitted.

The transformation matrix derivation unit 90 receives a local decoded image g or otherwise a local decoded image f as its input data. The transformation matrix derivation unit 90 selects the reference pixels from the image thus input, and derives and outputs a color space transformation matrix h.

The first color space conversion unit 100 receives an input image a and the transformation matrix h as its input data. The first color space conversion unit 100 performs color space conversion by applying the transformation matrix h to the input image a, so as to generate and output an input image in an uncorrelated space.

The second color space conversion unit 110 receives the local decoded image g and the transformation matrix h as its input data. The second color space conversion unit 110 performs color space conversion by applying the transformation matrix h to the local decoded image g, so as to generate and output a local decoded image in an uncorrelated space.

The third color space conversion unit 120 receives the local decoded image f and the transformation matrix h as its input data. The third color space conversion unit 120 performs color space conversion by applying the transformation matrix h to the local decoded image f, so as to generate and output a local decoded image in an uncorrelated space.

The inverse color space conversion unit 130 receives, as its input data, the transformation matrix h and a sum signal obtained by calculating the sum of the inter predicted image b or otherwise an intra predicted image c and a residual signal e subjected to inverse conversion. The inverse color space conversion unit 130 performs inverse color space conversion by applying the transformation matrix h to the aforementioned sum signal, so as to generate and output the local decoded image f.

Configuration and operation of video decoding apparatus QQ

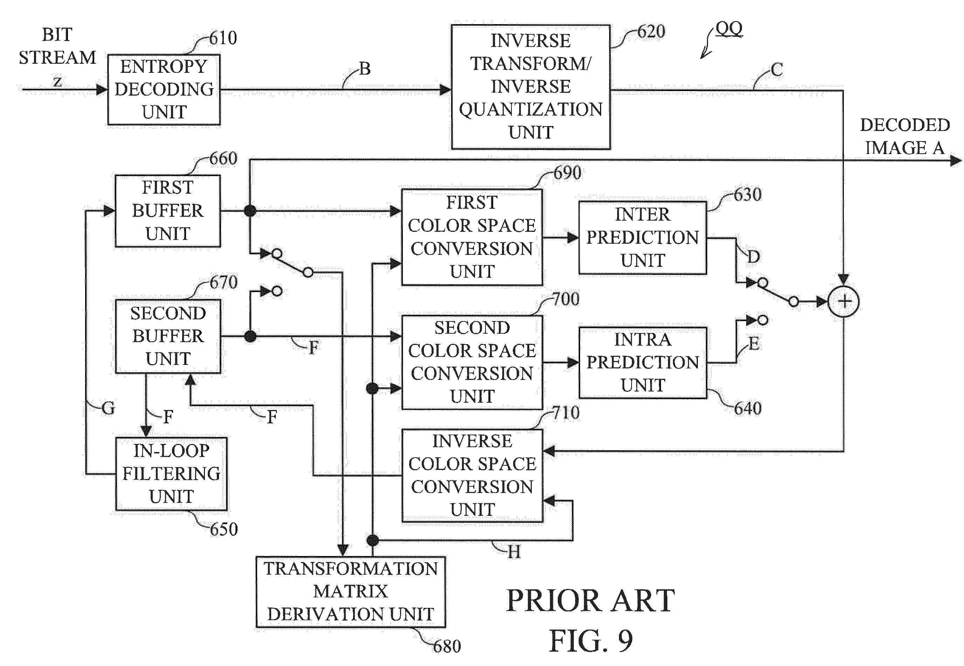

Fig. 9 is a block diagram showing a video decoding apparatus QQ according to a conventional example, configured to decode a video from a bit stream z generated by the video encoding apparatus PP. The video decoding apparatus QQ has the same configuration as that of the video decoding apparatus NN according to a conventional example shown in Fig. 7 except that the video decoding apparatus QQ further includes a transformation matrix derivation unit 680, a first color space conversion unit 690, a second color space conversion unit 700, and an inverse color space conversion unit 710. It should be noted that, in the description of the video decoding apparatus QQ, the same components as those of the video decoding apparatus NN are denoted by the same reference symbols, and description thereof will be omitted.

The transformation matrix derivation unit 680, the first color space conversion unit 690, the second color space conversion unit 700, and the inverse color space conversion unit 710 operate in the same manner as the transformation matrix derivation unit 90, the second color space conversion unit 110, the third color space conversion unit 120, and the inverse color space conversion unit 130, respectively.

Also, a method for converting the color space is described in CTVC-L0371, AHG7: "In-loop color-space transformation of residual signals for range extensions"., as it is in H. Kato, et al., "Adaptive Color Conversion Method based on Coding Parameters of H.264/MPEG-4 AVC". In this method, the color space conversion is applied to a prediction residual, which is a feature of this method. With such a method, the number of times the color space conversion is performed can be reduced as compared with the method described in H. Kato, et al., "Adaptive Color Conversion Method based on Coding

Parameters of H.264/MPEG-4 AVC".

With the video encoding apparatus and the video decoding apparatus configured to perform color space conversion according to the known techniques described above, encoding processing or decoding processing is performed in a converted color space. Such an arrangement requires an increased number of pixels to be subjected to the color space conversion. Thus, such an arrangement is not capable of reducing the processing load, which is a problem.

In view of the aforementioned problems, we have appreciated that it would be desirable to provide a technique for reducing redundancy that occurs in a color space, and for reducing the processing load.


SUMMARY OF THE INVENTION

In order to solve the aforementioned problems, the present invention proposes the following items.

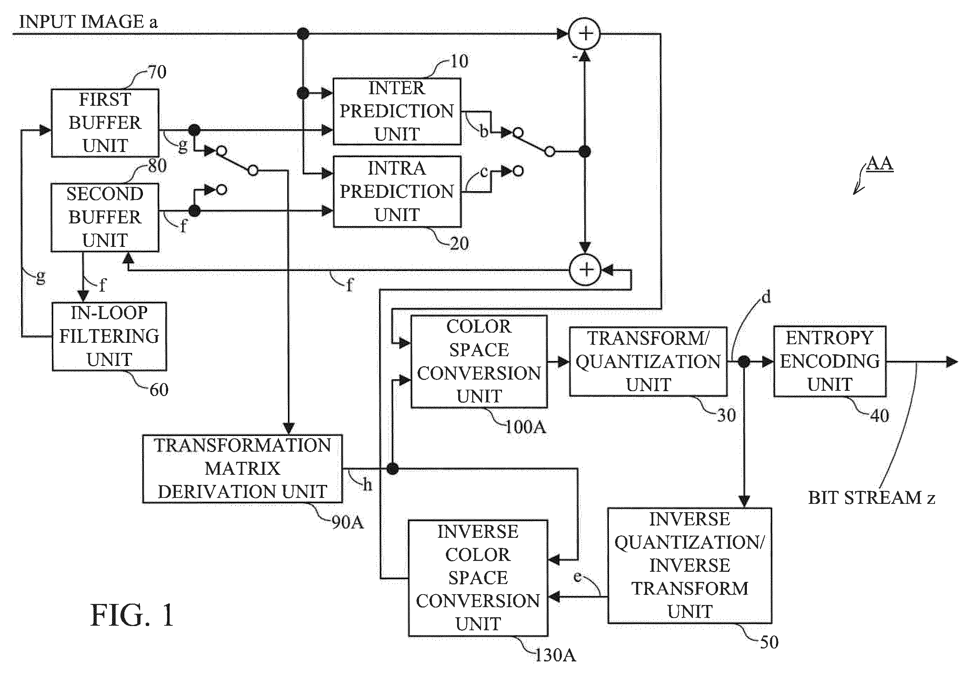

(1) The present invention proposes a video encoding apparatus that encodes a video having multiple color components by means of intra frame prediction or otherwise inter frame prediction. The video encoding apparatus comprises: a transformation matrix derivation unit (which corresponds to a transformation matrix derivation unit 90A shown in Fig. 1, for example) that derives a transformation matrix using encoded pixels; a color space conversion unit (which corresponds to a color space conversion unit 100A shown in Fig. 1, for example) that performs color space conversion by applying the transformation matrix derived by the transformation matrix derivation unit to a residual signal which represents a difference between an input image that forms the video and a predicted image generated by means of the inter frame prediction or otherwise the intra frame prediction, so as to generate a residual signal in an uncorrelated space; a quantization unit (which corresponds to a transform/quantization unit 30 shown in Fig. 1, for example) that quantizes the residual signal generated in an uncorrelated space by means of the color space conversion unit, so as to generate a quantized coefficient; and an encoding unit (which corresponds to an entropy encoding unit 40 shown in Fig. 1, for example) that encodes the quantized coefficient generated by the quantization unit.

Here, the correlation between color components remains in the residual signal. Accordingly, with the present invention, the transformation matrix is applied to the residual signal so as to perform color space conversion. Such an arrangement is capable of reducing the correlation between color components contained in the residual signal, thereby reducing redundancy in the color space.

Also, with the present invention, as described above, the transformation matrix is applied to the residual signal so as to perform the color space conversion. Thus, such an arrangement requires only a single color space conversion unit as compared with the video encoding apparatus PP according to a conventional example shown in Fig. 8 that requires three color space conversion units. Thus, such an arrangement provides a reduced processing load.

(2) The present invention proposes the video encoding apparatus described in (1), wherein the transformation matrix derivation unit derives the transformation matrix after color spatial resolutions set for the color components of an image formed of encoded pixels are adjusted such that the color spatial resolutions match a highest color spatial resolution, and wherein the color space conversion unit generates a residual signal in the uncorrelated space after the color spatial resolutions set for the color components of the residual signal are adjusted such that the color spatial resolutions match a highest color spatial resolution, following which the color space conversion unit returns the color spatial resolutions with respect to the color components of the residual signal generated in the uncorrelated space to original spatial resolutions.

With the invention, in the video encoding apparatus described in (1), after the color spatial resolutions set for the three color components of an image or otherwise a residual signal are adjusted such that they match the highest color spatial resolution among them, various kinds of processing are performed. Thus, such an arrangement is capable of encoding an input image having three color components at least one of which has a different color spatial resolution, in addition to an input image having three color components each having the same color spatial resolution.

(3) The present invention proposes the video encoding apparatus described in (1) or (2), wherein, in a case in which intra frame prediction is applied, the transformation matrix derivation unit uses, as reference pixels, the encoded pixels located neighboring a coding target block set in a frame to be subjected to the intra frame prediction, wherein, in a case in which inter frame prediction is applied, the transformation matrix derivation unit generates a predicted image of the coding target block set in a frame to be subjected to the inter frame prediction, based on a region in a reference frame indicated by a motion vector obtained for the coding target block, and uses the pixels that form the predicted image thus generated as the reference pixels, and wherein the transformation matrix derivation unit derives the transformation matrix using the reference pixels.

With the invention, in the video encoding apparatus described in (1) or (2), the reference pixels are selected for each of a coding target block set in a frame to be subjected to intra frame prediction and a coding target block set in a frame to be subjected to inter frame prediction. Thus, such an arrangement is capable of deriving the transformation matrix using the reference pixels thus selected.

(4) The present invention proposes the video encoding apparatus described in (3), wherein, in a case in which the intra frame prediction is applied, the transformation matrix derivation unit uses, as the reference pixels, encoded pixels located on an upper side or otherwise a left side neighboring a coding target block set in a frame to be subjected to the intra frame prediction, and wherein, in a case in which the inter frame prediction is applied, the transformation matrix derivation unit generates a predicted image of a coding target block set in a frame to be subjected to the inter frame prediction based on a region in a reference frame indicated by a motion vector obtained for the coding target block, uses the pixels that form the predicted image thus generated as the reference pixels, and subsamples the reference pixels such that the number of reference pixels is represented by a power of 2.

With the invention, in the video encoding apparatus described in (3), such an arrangement is capable of selecting the reference pixels for each of a coding target block set in a frame to be subjected to intra frame prediction and a coding target block set in a frame to be subjected to inter frame prediction.

(5) The present invention proposes the video encoding apparatus described in any one of (1) through (4), wherein the transformation matrix derivation unit comprises: an inverse square root calculation unit that calculates an inverse square root using fixed-point computation; and a Jacobi calculation unit that performs calculation using the Jacobi method for calculating eigenvalues and eigenvectors using fixed-point computation.

Typically, a conventional video encoding apparatus configured to perform the color space conversion as described above uses a standard SVD (Singular Value Decomposition) algorithm. Such an arrangement requires floating-point calculations, leading to a problem in that it is unsuitable for a hardware implementation.

In order to solve the aforementioned problem, with the present invention, in the video encoding apparatus described in any one of (1) through (4), the inverse square root calculation is performed using fixed-point computation. Furthermore, such an arrangement performs calculation using the Jacobi method for calculating eigenvalues and eigenvectors using fixed-point computation. Thus, such an arrangement requires no floating-point calculation. Thus, such an arrangement provides hardware-friendly color space conversion.

Also, with the present invention, as described above, in the video encoding apparatus described in any one of (1) through (4), the inverse square root calculation is performed using fixed-point computation. Furthermore, such an arrangement performs calculation using the Jacobi method for calculating eigenvalues and eigenvectors using fixed-point computation. Such an arrangement allows the processing load to be reduced.

(6) The present invention proposes the video encoding apparatus described in (5), wherein the inverse square root calculation unit calculates an inverse square root using fixed-point computation that is adjusted according to a bit depth of an input image that forms the video, and wherein the Jacobi calculation unit performs calculation using the Jacobi method for calculating eigenvalues and eigenvectors using fixed-point computation that is adjusted according to the bit depth of the input image that forms the video.

With the present invention, in the video encoding apparatus described in (5), the inverse square root calculation and the calculation using the Jacobi method for calculating eigenvalues and eigenvectors can be performed using fixed-point computation adjusted according to the bit depth of the input image.

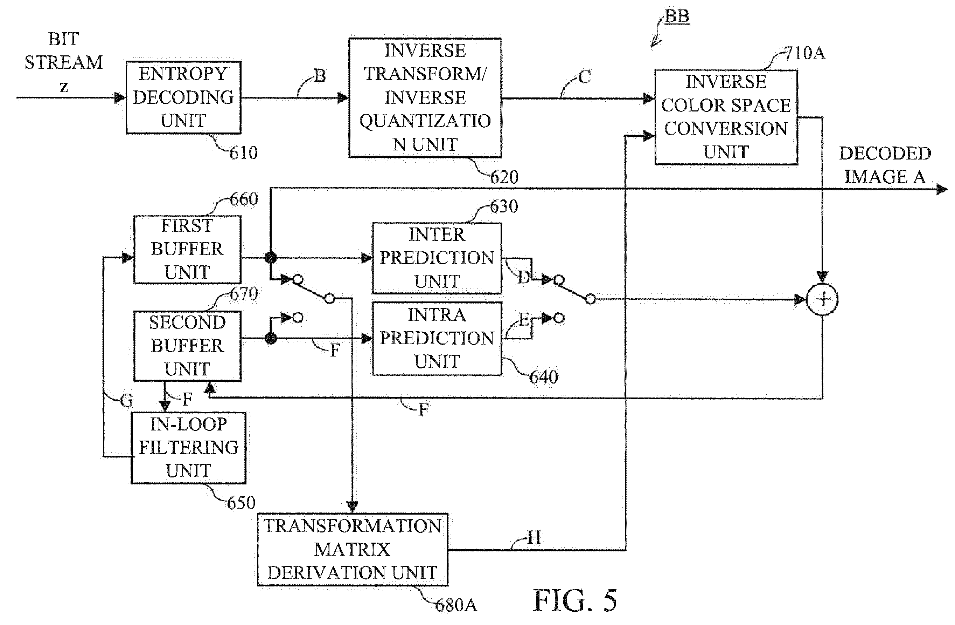

(7) The present invention proposes a video decoding apparatus that decodes a video having multiple color components by means of intra frame prediction or otherwise inter frame prediction. The video decoding apparatus comprises: a transformation matrix derivation unit (which corresponds to a transformation matrix derivation unit 680A shown in Fig. 5, for example) that derives a transformation matrix using encoded pixels; a decoding unit (which corresponds to an entropy decoding unit 610 shown in Fig. 5, for example) that decodes an encoded signal; an inverse quantization unit (which corresponds to an inverse transform/inverse quantization unit 620 shown in Fig. 5, for example) that performs inverse quantization on the signal decoded by the decoding unit, so as to generate a residual signal; and an inverse color space conversion unit (which corresponds to an inverse color space conversion unit 710A shown in Fig. 5, for example) that performs inverse color space conversion by applying the transformation matrix derived by the transformation matrix derivation unit to the residual signal subjected to the inverse quantization by means of the inverse quantization unit, so as to generate a residual signal in a correlated space.

Here, the correlation between the color components remains in the residual signal. With the present invention, a transformation matrix is applied to the residual signal so as to perform the color space conversion. Such an arrangement is capable of reducing the correlation between color components contained in the residual signal, thereby reducing redundancy in the color space.

Also, with the present invention, as described above, the transformation matrix is applied to the residual signal so as to perform the color space conversion. Thus, such an arrangement requires no color space conversion unit as compared with the video decoding apparatus QQ according to a conventional example shown in Fig. 9 that requires two color space conversion units, thereby reducing the processing load.

(8) The present invention proposes the video decoding apparatus described in (7), wherein the transformation matrix derivation unit derives the transformation matrix after color spatial resolutions set for the color components of an image formed of encoded pixels are adjusted such that the color spatial resolutions match a highest color spatial resolution, and wherein the inverse color space conversion unit generates a residual signal in the correlated space after the color spatial resolutions set for the color components of the residual signal are adjusted such that the color spatial resolutions match a highest color spatial resolution, following which the inverse color space conversion unit returns the color spatial resolutions with respect to the color components of the residual signal generated in the correlated space to original spatial resolutions.

With the invention, in the video decoding apparatus described in (7), after the color spatial resolutions set for the three color components of an image or otherwise a residual signal are adjusted such that they match the highest color spatial resolution among them, various kinds of processing are performed. Thus, such an arrangement is capable of decoding an input image having three color components at least one of which has a different color spatial resolution, in addition to an input image having three color components each having the same color spatial resolution.

(9) The present invention proposes the video decoding apparatus described in (7) or (8), wherein, in a case in which intra frame prediction is applied, the transformation matrix derivation unit uses, as reference pixels, the encoded pixels located neighboring a coding target block set in a frame to be subjected to the intra frame prediction, wherein, in a case in which inter frame prediction is applied, the transformation matrix derivation unit generates a predicted image of the coding target block set in a frame to be subjected to the inter frame prediction, based on a region in a reference frame indicated by a motion vector obtained for the coding target block, and uses the pixels that form the predicted image thus generated as the reference pixels, and wherein the transformation matrix derivation unit derives the transformation matrix using the reference pixels.

With the invention, in the video decoding apparatus described in (7) or (8), the reference pixels are selected for each of a coding target block set in a frame to be subjected to intra frame prediction and a coding target block set in a frame to be subjected to inter frame prediction. Thus, such an arrangement is capable of deriving the transformation matrix using the reference pixels thus selected.

(10) The present invention proposes the video decoding apparatus described in (9), wherein, in a case in which the intra frame prediction is applied, the transformation matrix derivation unit uses, as the reference pixels, encoded pixels located on an upper side or otherwise a left side neighboring a coding target block set in a frame to be subjected to the intra frame prediction, and wherein, in a case in which the inter frame prediction is applied, the transformation matrix derivation unit generates a predicted image of a coding target block set in a frame to be subjected to the inter frame prediction based on a region in a reference frame indicated by a motion vector obtained for the coding target block, uses the pixels that form the predicted image thus generated as the reference pixels, and subsamples the reference pixels such that the number of reference pixels is represented by a power of 2.

With the invention, in the video decoding apparatus described in (9), such an arrangement is capable of selecting the reference pixels for each of a coding target block set in a frame to be subjected to intra frame prediction and a coding target block set in a frame to be subjected to inter frame prediction.

(11) The present invention proposes the video decoding apparatus described in any one of (7) through (10), wherein the transformation matrix derivation unit comprises: an inverse square root calculation unit that calculates an inverse square root using fixed-point computation; and a Jacobi calculation unit that performs calculation using the Jacobi method for calculating eigenvalues and eigenvectors using fixed-point computation.

Typically, a conventional video decoding apparatus configured to perform the color space conversion as described above uses a standard SVD (Singular Value Decomposition) algorithm. Such an arrangement requires floating-point calculations, leading to a problem in that it is unsuitable for a hardware implementation.

In order to solve the aforementioned problem, with the present invention, in the video decoding apparatus described in any one of (7) through (10), the inverse square root calculation is performed using fixed-point computation. Furthermore, such an arrangement performs calculation using the Jacobi method for calculating eigenvalues and eigenvectors using fixed-point computation. Thus, such an arrangement requires no floating-point calculation. Thus, such an arrangement provides hardware-friendly color space conversion.

Also, with the present invention, as described above, in the video decoding apparatus described in any one of (7) through (10), the inverse square root calculation is performed using fixed-point computation. Furthermore, such an arrangement performs calculation using the Jacobi method for calculating eigenvalues and eigenvectors using fixed-point computation. Such an arrangement allows the processing load to be reduced.

(12) The present invention proposes the video decoding apparatus described in (11), wherein the inverse square root calculation unit calculates an inverse square root using fixed-point computation that is adjusted according to a bit depth of an input image that forms the video, and wherein the Jacobi calculation unit performs calculation using the Jacobi method for calculating eigenvalues and eigenvectors using fixed-point computation that is adjusted according to the bit depth of the input image that forms the video.

With the present invention, in the video decoding apparatus described in (11), the inverse square root calculation and the calculation using the Jacobi method for calculating eigenvalues and eigenvectors can be performed using fixed-point computation adjusted according to the bit depth of the input image.

(13) The present invention proposes a video encoding method used by a video encoding apparatus that comprises a transformation matrix derivation unit (which corresponds to a transformation matrix derivation unit 90A shown in Fig. 1, for example), a color space conversion unit (which corresponds to a color space conversion unit 100A shown in Fig. 1, for example), a quantization unit (which corresponds to a transform/quantization unit 30 shown in Fig. 1, for example), and an encoding unit (which corresponds to an entropy encoding unit 40 shown in Fig. 1, for example), and that encodes a video having multiple color components by means of intra frame prediction or otherwise inter frame prediction. The video encoding method comprises: first processing in which the transformation matrix derivation unit derives a transformation matrix using encoded pixels; second processing in which the color space conversion unit performs color space conversion by applying the transformation matrix derived by the transformation matrix derivation unit to a residual signal which represents a difference between an input image that forms the video and a predicted image generated by means of the inter frame prediction or otherwise the intra frame prediction, so as to generate a residual signal in an uncorrelated space; third processing in which the quantization unit quantizes the residual signal generated in an uncorrelated space by means of the color space conversion unit, so as to generate a quantized coefficient; and fourth processing in which the encoding unit encodes the quantized coefficient generated by the quantization unit.

With the present invention, the same advantages as described above can be provided.

(14) The present invention proposes a video decoding method used by a video decoding apparatus that comprises a transformation matrix derivation unit (which corresponds to a transformation matrix derivation unit 680A shown in Fig. 5, for example), a decoding unit (which corresponds to an entropy decoding unit 610 shown in Fig. 5, for example), an inverse quantization unit (which corresponds to an inverse transform/inverse quantization unit 620 shown in Fig. 5, for example), and an inverse color space conversion unit (which corresponds to an inverse color space conversion unit 710A shown in Fig. 5, for example), and that decodes a video having multiple color components by means of intra frame prediction or otherwise inter frame prediction The video decoding method comprises: first processing in which the transformation matrix derivation unit derives a transformation matrix using encoded pixels; second processing in which the decoding unit decodes an encoded signal; third processing in which the inverse quantization unit performs inverse quantization on the signal decoded by the decoding unit, so as to generate a residual signal; and fourth processing in which the inverse color space conversion unit performs inverse color space conversion by applying the transformation matrix derived by the transformation matrix derivation unit to the residual signal subjected to the inverse quantization by means of the inverse quantization unit, so as to generate a residual signal in a correlated space.

With the present invention, the same advantages as described above can be provided.

(15) The present invention proposes a computer program configured to instruct a computer to execute a video encoding method used by a video encoding apparatus that comprises a transformation matrix derivation unit (which corresponds to a transformation matrix derivation unit 90A shown in Fig. 1, for example), a color space conversion unit (which corresponds to a color space conversion unit 100A shown in Fig. 1, for example), a quantization unit (which corresponds to a transform/quantization unit 30 shown in Fig. 1, for example), and an encoding unit (which corresponds to an entropy encoding unit 40 shown in Fig. 1, for example), and that encodes a video having multiple color components by means of intra frame prediction or otherwise inter frame prediction. The video encoding method comprises: first processing in which the transformation matrix derivation unit derives a transformation matrix using encoded pixels; second processing in which the color space conversion unit performs color space conversion by applying the transformation matrix derived by the transformation matrix derivation unit to a residual signal which represents a difference between an input image that forms the video and a predicted image generated by means of the inter frame prediction or otherwise the intra frame prediction, so as to generate a residual signal in an uncorrelated space; third processing in which the quantization unit quantizes the residual signal generated in an uncorrelated space by means of the color space conversion unit, so as to generate a quantized coefficient; and fourth processing in which the encoding unit encodes the quantized coefficient generated by the quantization unit.

With the present invention, the same advantages as described above can be provided.

(16) The present invention proposes a computer program configured to instruct a computer to execute a video decoding method used by a video decoding apparatus that comprises a transformation matrix derivation unit (which corresponds to a transformation matrix derivation unit 680A shown in Fig. 5, for example), a decoding unit (which corresponds to an entropy decoding unit 610 shown in Fig. 5, for example), an inverse quantization unit (which corresponds to an inverse transform/inverse quantization unit 620 shown in Fig. 5, for example), and an inverse color space conversion unit (which corresponds to an inverse color space conversion unit 710A shown in Fig. 5, for example), and that decodes a video having multiple color components by means of intra frame prediction or otherwise inter frame prediction. The video decoding method comprises: first processing in which the transformation matrix derivation unit derives a transformation matrix using encoded pixels; second processing in which the decoding unit decodes an encoded signal; third processing in which the inverse quantization unit performs inverse quantization on the signal decoded by the decoding unit, so as to generate a residual signal; and fourth processing in which the inverse color space conversion unit performs inverse color space conversion by applying the transformation matrix derived by the transformation matrix derivation unit to the residual signal subjected to the inverse quantization by means of the inverse quantization unit, so as to generate a residual signal in a correlated space.

With the present invention, the same advantages as described above can be provided.

With the present invention, such an arrangement is capable of reducing redundancy in the color space and reducing the processing load.

BRIEF DESCRIPTION OF THE DRAWINGS

Fig. 1 is a block diagram showing a video encoding apparatus according to a first embodiment of the present invention.
Fig. 2 is a diagram for describing the selection of reference pixels performed by the video encoding apparatus according to the embodiment.
Fig. 3 is a diagram for describing the selection of reference pixels performed by the video encoding apparatus according to the embodiment.
Fig. 4 is a diagram for describing the selection of reference pixels performed by the video encoding apparatus according to the embodiment.
Fig. 5 is a block diagram showing a video decoding apparatus according to the first embodiment of the present invention.
Fig. 6 is a block diagram showing a video encoding apparatus according to a conventional example.
Fig. 7 is a block diagram showing a video decoding apparatus according to a conventional example.
Fig. 8 is a block diagram showing a video encoding apparatus according to a conventional example.
Fig. 9 is a block diagram showing a video decoding apparatus according to a conventional example.

DETAILED DESCRIPTION

Description will be made below regarding embodiments of the present invention with reference to the drawings. It should be noted that each of the components of the following embodiments can be replaced by a different known component or the like as appropriate. Also, any kind of variation may be made including a combination with other known components. That is to say, the following embodiments described below do not intend to limit the content of the present invention described in the appended claims.

First embodiment

Configuration and operation of video encoding apparatus AA

Fig. 1 is a block diagram showing a video encoding apparatus AA according to a first embodiment of the present invention. The video encoding apparatus AA encodes an input image a having three color components each having the same color spatial resolution, and outputs the encoded image as a bitstream z. The video encoding apparatus AA has the same configuration as that of the video encoding apparatus PP according to a conventional example shown in Fig. 8 except that the video encoding apparatus AA includes a transformation matrix derivation unit 90A instead of the transformation matrix derivation unit 90, includes a color space conversion unit 100A instead of the first color space conversion unit 100, the second color space conversion unit 110, and the third color space conversion unit 120, and includes an inverse color space conversion unit 130A instead of the inverse color space conversion unit 130. It should be noted that, in the description of the video encoding apparatus AA, the same components as those of the video encoding apparatus PP are denoted by the same reference symbols, and description thereof will be omitted.

The color space conversion unit 100A receives, as its input data, the transformation matrix h and an error (residual) signal which represents a difference between the input image a and the inter predicted image b or otherwise the intra predicted image c. The color space conversion unit 100A performs color space conversion by applying the transformation matrix h to the residual signal so as to generate and output a residual signal in an uncorrelated space.

The inverse color space conversion unit 130A receives the residual signal e inverse transformed and the transformation matrix h as its input data. The inverse color space conversion unit 130A performs inverse color space conversion by applying the transformation matrix h to the residual signal e thus inverse converted, so as to generate and output a residual signal configured in a correlated space.

The transformation matrix derivation unit 90A receives the local decoded image g or otherwise the local decoded image f as its input data. The transformation matrix derivation unit 90A selects the reference pixels from the input image, and derives and outputs the transformation matrix h to be used to perform color space conversion. Detailed description will be made below regarding the selection of the reference pixels by means of the transformation matrix derivation unit 90A, and the derivation of the transformation matrix h by means of the transformation matrix derivation unit 90A.

Selection of reference pixels

Description will be made below regarding the selection of the reference pixels by means of the transformation matrix derivation unit 90A. There is a difference in the method for selecting the reference pixels between a case in which intra prediction is applied to a coding target block and a case in which inter prediction is applied to the coding target block.

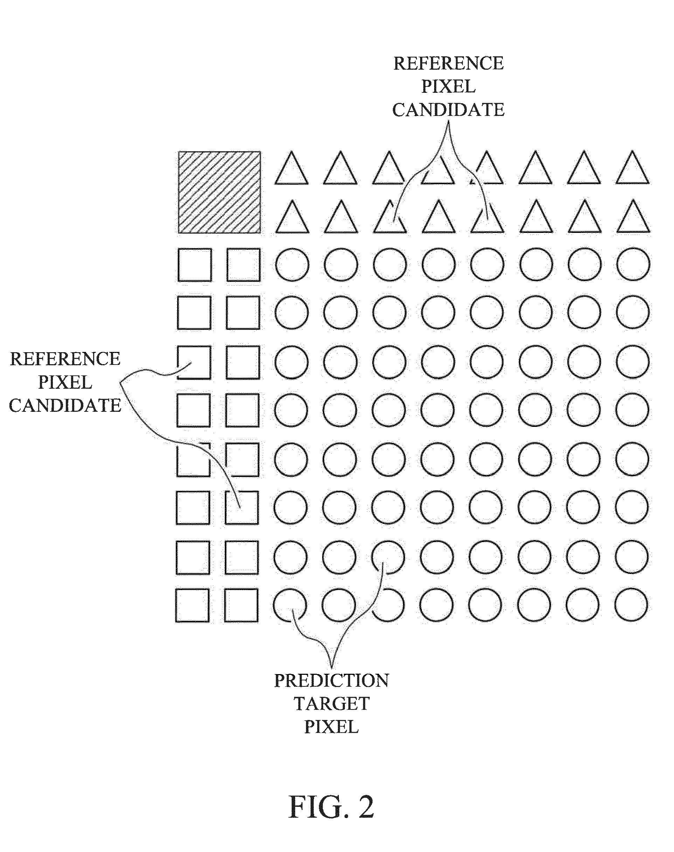

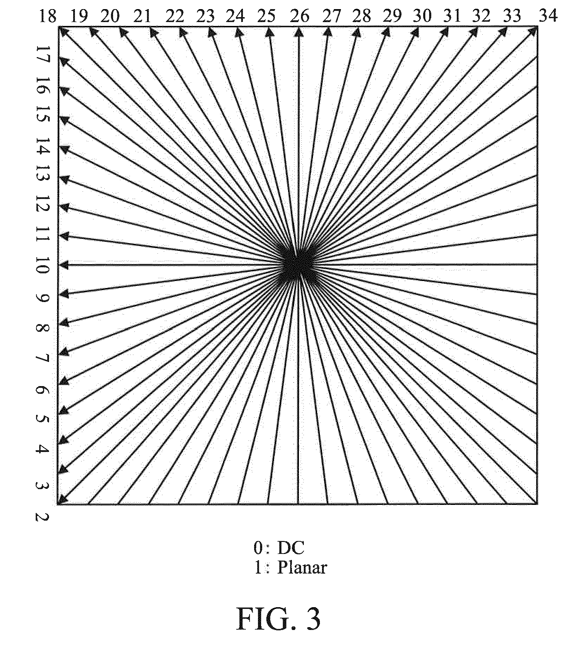

First, description will be made below with reference to Figs. 2 and 3 regarding the selection of the reference pixels by means of the transformation matrix derivation unit 90A in a case in which intra prediction is applied to a coding target block. In Fig. 2, the circles each indicate a prediction target pixel that forms a coding target block having a block size of (8 x 8). Also, triangles and squares each represent a reference pixel candidate, i.e., a candidate for a reference pixel. Each reference pixel candidate is located neighboring the coding target block.

The transformation matrix derivation unit 90A selects the reference pixels from among the reference pixel candidates according to the intra prediction direction. Description will be made in the present embodiment regarding an arrangement in which the video encoding apparatus AA supports HEVC (High Efficiency Video Coding). In this case, DC and planar, which have no directionality, and 32 modes of intra prediction directions each having directionality, are defined (see Fig. 3).

In a case in which the intra prediction direction has vertical directionality, i.e., in a case in which the intra prediction direction is set to any one of the directions indicated by reference numerals 26 through 34 in Fig. 3, the reference pixel candidates indicated by the triangles shown in Fig. 2 are selected as the reference pixels. In a case in which the intra prediction direction has horizontal directionality, i.e., in a case in which the intra prediction direction is set to any one of the directions indicated by reference numerals 2 through 10 in Fig. 3, the reference pixel candidates indicated by the squares shown in Fig. 2 are selected as the reference pixels. In a case in which the intra prediction direction has diagonal directionality, i.e., in a case in which the intra prediction direction is set to any one of the directions indicated by reference numerals 11 through 25 in Fig. 3, the reference pixel candidates indicated by the triangles and squares shown in Fig. 2 are selected as the reference pixels.

It should be noted that, in a case in which the number of reference pixels is a power of 2, derivation of the transformation matrix described later can be performed in a simple manner. Thus, description will be made regarding an arrangement in which the transformation matrix derivation unit 90A does not uses the pixels located in a hatched area shown in Fig. 2 as the reference pixel candidates.

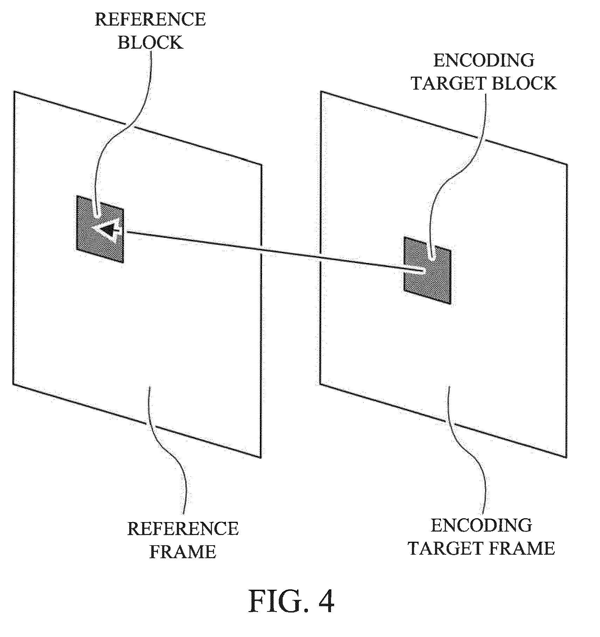

Next, description will be made below with reference to Fig. 4 regarding the selection of the reference pixels by means of the transformation matrix derivation unit 90A in a case in which inter prediction is applied to a coding target block.

The transformation matrix derivation unit 90A generates a predicted image of the coding target block based on a region (which corresponds to the reference block shown in Fig. 4) in a reference frame indicated by a motion vector obtained for the coding target block. Furthermore, the transformation matrix derivation unit 90A selects, as the reference pixels, the pixels that form the predicted image thus generated.

It should be noted that, in a case in which the number of reference pixels is a power of 2, derivation of the transformation matrix described later can be performed in a simple manner as described above. Thus, in a case in which the number is not a power of 2, e.g., in a case in which the coding target block has a shape that differs from a square, the reference pixels are subsampled as appropriate such that the number of reference pixels is a power of 2.

Derivation of transformation matrix

Description will be made below regarding derivation of the transformation matrix h by means of the transformation matrix derivation unit 90A.

First, the transformation matrix derivation unit 90A generates a matrix with x rows and y columns. Here, x represents the number of color components. For example, in a case in which the input image a is configured as an image in the YCbCr format, x is set to 3. Also, y represents the number of reference pixels. For example, in a case in which the number of reference pixels is 16, y is set to 16. Each element of the x row, y column matrix is set to a pixel value of the corresponding reference pixel of the corresponding color component.

Next, the transformation matrix derivation unit 90A calculates the average of the pixel values of all the selected reference pixels for each color component. Furthermore, the transformation matrix derivation unit 90A subtracts the average thus calculated from each element of the x row, y column matrix.

Next, the transformation matrix derivation unit 90A generates a transposition of the x row, y column matrix. Furthermore, the transformation matrix derivation unit 90A multiplies the x row, y column matrix by the transposition of the x row, y column matrix thus generated, thereby generating a covariance matrix.

Next, the transformation matrix derivation unit 90A normalizes the covariance matrix by means of a shift operation such that the maximum value of the diagonal elements is within a range between $2^N$ and $(2^{N+1} - 1)$, thereby calculating a covariance matrix cov as represented by the following Expression (1). In this stage, when any one of the diagonal elements is zero, a unit matrix is used as the transformation matrix h.

Expression 1

$$cov = \begin{bmatrix} a & d & e \\ d & b & f \\ e & f & c \end{bmatrix} \cdots \quad (1)$$

Next, the transformation matrix derivation unit 90A applies the Jacobi method for calculating eigenvalues and eigenvectors in the form of integers (see William H. Press, William T. Vetterling, Saul A. Teukolsky, Brian P. Flannery, "Numerical Recipes in C" [Japanese-language version], first edition, Gijutsu-Hyohron Co., Ltd., June 1993, pp. 345-351., for example) to the covariance matrix cov so as to derive a transformation matrix $E_n$. Here, E represents an eigenvector, and $E_0$ represents a unit matrix. The specific procedure will be described as follows. First, the maximum value is searched for and selected from among the elements d, e, and f in Expression (1), and the maximum element thus selected is represented by cov(p,q) with p as the row number and with q as the column number. Next, the steps represented by the following Expressions (2) through (12) are repeatedly executed with pp as cov(p,p), with qq as cov(q,q), and with pq as cov(p,q).

Expression 2

$$\alpha = pp - qq \cdots \quad (2)$$

Expression 3

$$\beta = -2pq \cdots \quad (3)$$

Expression 4

$$\gamma = \frac{|\alpha|}{\sqrt{(\alpha^2 + \beta^2) >> (2N - M)}} >> M \cdots \quad (4)$$

Expression 5

$$s = \frac{2^N - \gamma}{\sqrt{(2^N - \gamma) << (M - N - 1)}} >> (M + 1) \cdots \quad (5)$$

Expression 6

$$c = \frac{2^N + \gamma}{\sqrt{(2^N + \gamma) << (M - N - 1)}} >> (M + 1) \quad \cdots \quad (6)$$

Expression 7

$$G(p, p) = c \quad \cdots \quad (7)$$

Expression 8

$$G(p, q) = s \quad \cdots \quad (8)$$

Expression 9

$$G(q, p) = -s \quad \cdots \quad (9)$$

Expression 10

$$G(q, q) = c \quad \cdots \quad (10)$$

Expression 11

$$E_{n+1} = E_n G \quad \cdots \quad (11)$$

Expression 12

$$cov_{n+1} = G^T cov_n G \quad \cdots \quad (12)$$

It should be noted that, in the steps represented by Expressions (4) through (6), inverse square root calculation may be executed with integer precision using a method described in CUTE CODE [online] <URL: http://matthewarcus.wordpress.com/2012/11/19/134/>, accessed on March 12, 2013, for example. Also, in the steps represented by Expressions (1) through (12), the inverse square root calculation may be executed as M-bit fixed-point computation, and other calculations may be executed as N-bit fixed-point computation. Such an arrangement allows all the calculations to be performed in an integer manner. Thus, such an arrangement requires only addition, subtraction, multiplication, and shift operations to perform all the calculations.

Configuration and operation of video decoding apparatus BB

Fig. 5 is a block diagram showing a video decoding apparatus BB according to the first embodiment of the present invention, configured to decode a video from the bit stream z generated by the video encoding apparatus AA according to the first embodiment of the present invention. The video decoding apparatus BB has the same configuration as that of the video decoding apparatus QQ according to a conventional example shown in Fig. 9 except that the video decoding apparatus BB includes a transformation matrix derivation unit 680A instead of the transformation matrix derivation unit 680, and includes an inverse color space conversion unit 710A instead of the first color space conversion unit 690, the second color space conversion unit 700, and the inverse color space conversion unit 710. It should be noted that, in the description of the video decoding apparatus BB, the same components as those of the video decoding apparatus QQ are denoted by the same reference symbols, and description thereof will be omitted.

The inverse color space conversion unit 710A receives, as its input data, a residual signal C inverse transformed and output from the inverse transform/inverse quantization unit 620 and the transformation matrix H output from the transformation matrix derivation unit 680A. The inverse color space conversion unit 710A applies the transformation matrix H to the residual signal C thus inverse transformed, and outputs the calculation result.

The transformation matrix derivation unit 680A operates in the same manner as the transformation matrix derivation unit 90A shown in Fig. 1, so as to derive the transformation matrix H, and outputs the transformation matrix H thus derived.

With the video encoding apparatus AA and the video decoding apparatus BB described above, the following advantages are provided.

With the video encoding apparatus AA and the video decoding apparatus BB, the transformation matrix is applied to the residual signal so as to perform color space conversion. Here, the correlation between the color components remains in the residual signal. Such an arrangement is capable of reducing the inter-color correlation contained in the residual signal, thereby reducing redundancy in the color space.

Also, as described above, the video encoding apparatus AA applies the transformation matrix to the residual signal so as to perform the color space conversion. Thus, the video encoding apparatus AA requires only a single color space conversion unit as compared with the video encoding apparatus PP according to a conventional example shown in Fig. 8 that requires three color space conversion units. Thus, such an arrangement is capable of reducing the number of pixels to be subjected to color space conversion, thereby reducing the processing load.

Also, with the video encoding apparatus AA and the video decoding apparatus BB, such an arrangement is capable of selecting the reference pixels from a coding target block set in a frame to be subjected to intra frame prediction and selecting the reference pixels from a coding target block set in a frame to be subjected to inter frame prediction. Such an arrangement is capable of deriving a transformation matrix using the reference pixels thus selected.

Also, with the video encoding apparatus AA and the video decoding apparatus BB, inverse square root calculation is performed using fixed-point computation. Furthermore, eigenvalue calculation is performed using fixed-point computation using the Jacobi method. That is to say, such an arrangement requires no floating-point calculation. Thus, such an arrangement provides color space conversion suitable for a hardware implementation. In addition, such an arrangement reduces the processing load.

Also, with the video decoding apparatus BB, as described above, the transformation matrix is applied to the residual signal so as to perform color-space conversion of the residual signal. Thus, such an arrangement requires no color-space conversion unit as compared with the video decoding apparatus QQ according to a conventional example shown in Fig. 9 that requires two color space conversion units. Accordingly, such an arrangement allows the number of pixels which are to be subjected to color space conversion to be reduced, thereby providing reduced processing load.

The repeated calculation is performed with M as 16, and N as 12. The number of calculation loops for calculating an inverse square root is set to 2. Also, the number of calculation loops for calculating eigenvalues using the Jacobi method is set to 3. As compared with the video encoding apparatus MM shown in Fig. 6 and the video decoding apparatus NN shown in Fig. 7, such an arrangement is capable of reducing, on average by 24%, the amount of coding required to provide the same PSNR (Peak Signal to Noise Ratio), while it requires only a 7% increase in encoding time and decoding time.

Second embodiment

Description will be made below regarding a video encoding apparatus CC according to a second embodiment of the present invention. The video encoding apparatus CC encodes an input image a having three color components each having the same color spatial resolution, or otherwise at least one of which has a different color spatial resolution, and outputs the encoded image as a bitstream z. The video encoding apparatus CC has the same configuration as that of the video encoding apparatus AA according to the first embodiment of the present invention shown in Fig. 1 except that the video encoding apparatus CC includes a transformation matrix derivation unit 90B instead of the transformation matrix derivation unit 90A, includes a color space conversion unit 100B instead of the color space conversion unit 100A, and includes an inverse color space conversion unit 130B instead of the inverse color space conversion unit 130A. It should be noted that, in the description of the video encoding apparatus CC, the same components as those of the video encoding apparatus AA are denoted by the same reference symbols, and description thereof will be omitted.

The operation of the transformation matrix derivation unit 90B is the same as that of the transformation matrix derivation unit 90A except that, before the common operation, the transformation matrix derivation unit 90B adjusts the color spatial resolutions set for the three color components of the local decoded image g or the local decoded image f such that they match the highest color spatial resolution among those set for the three color components.

The operation of the color space conversion unit 100B is the same as that of the color space conversion unit 100A except that the color space conversion unit 100B performs first resolution conversion processing before the common processing, and performs first inverse resolution conversion processing after the common processing. In the first resolution conversion processing, the color spatial resolutions respectively set for the color components of the input residual signal are adjusted such that they match the highest color spatial resolution among those set for the three color components. On the other hand, in the first inverse resolution conversion processing, the color spatial resolutions adjusted by means of the first resolution conversion processing are returned to the original spatial resolutions with respect to the residual signal generated as a signal in an uncorrelated space by means of the same processing as that provided by the color space conversion unit 100A.

The operation of the inverse color space conversion unit 130B is the same as that of the inverse color space conversion unit 130A except that the inverse color space conversion unit 130B performs second resolution conversion processing before the common processing, and performs second inverse resolution conversion processing after the common processing. In the second resolution conversion processing, the color spatial resolutions respectively set for the color components of the input inverse transformed residual signal e are adjusted such that they match the highest color spatial resolution among those set for the three color components. On the other hand, in the second inverse resolution conversion processing, the color spatial resolutions adjusted by means of the second resolution conversion processing are returned to the original spatial resolutions with respect to the residual signal generated as signal in a correlated space by means of the same processing as that provided by the inverse color space conversion unit 130A.

Configuration and operation of video decoding apparatus DD

Description will be made regarding a video decoding apparatus DD according to the second embodiment of the present invention, configured to decode a video from the bit stream z generated by the video encoding apparatus CC according to the second embodiment of the present invention. The video decoding apparatus DD has the same configuration as that of the video decoding apparatus BB according to the first embodiment of the present invention shown in Fig. 5 except that the video decoding apparatus DD includes a transformation matrix derivation unit 680B instead of the transformation matrix derivation unit 680A, and includes an inverse color space conversion unit 710B instead of the inverse color space conversion unit 710A. It should be noted that, in the description of the video decoding apparatus DD, the same components as those of the video decoding apparatus BB are denoted by the same reference symbols, and description thereof will be omitted.

The transformation matrix derivation unit 680B and the inverse color space conversion unit 710B operate in the same manner as those in the transformation matrix derivation unit 90B and the inverse color space conversion unit 130B, respectively.

With the video encoding apparatus CC as described above, the following advantage is provided in addition to the advantages provided by the video encoding apparatus AA.

With the video encoding apparatus CC, various kinds of processing are performed by means of the transformation matrix derivation unit 90B, the color space conversion unit 100B, and the inverse color space conversion unit 130B after the color spatial resolutions respectively set for the three color components of an image or a residual signal are adjusted such that they match the highest resolution among them. Such an arrangement is capable of encoding an input image having three color components at least one of which has a different color spatial resolution, in addition to an input image having three color components each having the same color spatial resolution.

With the video decoding apparatus DD as described above, the following advantage is provided in addition to the advantages provided by the video decoding apparatus BB.

With the video decoding apparatus DD, various kinds of processing are performed by means of the transformation matrix derivation unit 680B and the inverse color space conversion unit 710B after the color spatial resolutions respectively set for the three color components of an image or a residual signal are adjusted such that they match the highest resolution among them. Such an arrangement is capable of decoding a bit stream having three color components at least one of which has a different color spatial resolution, in addition to a bit stream having three color components each having the same color spatial resolution.

It should be noted that the operation of the video encoding apparatus AA or CC, or the operation of the video decoding apparatus BB or DD may be recorded on a computer-readable non-temporary recording medium, and the video encoding apparatus AA or CC or the video decoding apparatus BB or DD may read out and execute the computer programs recorded on the recording medium, which provides the present invention.

Here, examples of the aforementioned recording medium include nonvolatile memory such as EPROM, flash memory, and the like, a magnetic disk such as a hard disk, and CD-ROM and the like. Also, the computer programs recorded on the recording medium may be read out and executed by a processor provided to the video encoding apparatus AA or CC or a processor provided to the video decoding apparatus BB or DD.

Also, the aforementioned computer program may be transmitted from the video encoding apparatus AA or CC or the video decoding apparatus BB or DD, which stores the computer program in a storage device or the like, to another computer system via a transmission medium or transmission wave used in a transmission medium. The term "transmission medium" configured to transmit a computer program as used here represents a medium having a function of transmitting information, examples of which include a network (communication network) such as the Internet, etc., and a communication link (communication line) such as a phone line, etc.

Also, the aforementioned computer program may be configured to provide a part of the aforementioned functions. Also, the aforementioned computer program may be configured to provide the aforementioned functions in combination with a different computer program already stored in the video encoding apparatus AA or CC or the video decoding apparatus BB or DD. That is to say, the aforementioned computer program may be configured as a so-called differential file (differential computer program).

Detailed description has been made above regarding the embodiments of the present invention with reference to the drawings. However, the specific configuration thereof is not restricted to the above-described embodiments. Rather, various kinds of design change may be made without departing from the spirit of the present invention.

For example, description has been made with reference to Fig. 2 in the aforementioned first embodiment in which the reference pixel candidates are set to the pixels of two rows located on the upper side of the prediction target pixels and the pixels of two columns located on the left side of the prediction target pixels. However, the number of rows and the number of columns are not restricted to two. For example, the number of rows and the number of columns may be set to one or three.

Description has been made in the aforementioned embodiments regarding an arrangement in which the number of color components that form the input image a is three. However, the present invention is not restricted to such an arrangement. For example, the number of color components may be set to two or four.

Also, in the aforementioned embodiments, inverse square root calculation may be performed using fixed-point computation that is adjusted according to the bit depth of the input image a. Also, eigenvalue calculation may be performed using the Jacobi method using fixed-point computation that is adjusted according to the bit depth of the input image a.

Description Of The Reference Numerals

AA, CC, MM, PP video encoding apparatus, BB, DD, NN, QQ video decoding apparatus, 90, 90A, 90B, 680, 680A, 680B transformation matrix derivation unit, 100A, 100B color space conversion unit, 130, 130A, 130B, 710, 710A, 710B inverse color space conversion unit.

**Claims**

1. A video encoding apparatus (AA) that encodes a video having a plurality of color components by means of intra frame prediction or otherwise inter frame prediction, the video encoding apparatus comprising:

   a transformation matrix derivation unit (90A) that derives a transformation matrix using encoded pixels;
   a color space conversion unit (100A) that performs color space conversion by applying the transformation matrix derived by the transformation matrix derivation unit to a residual signal which represents a difference between an input image that forms the video and a predicted image generated by means of the inter frame prediction or otherwise the intra frame prediction, so as to generate a residual signal in an uncorrelated space;
   a quantization unit (30) that quantizes the residual signal generated in an uncorrelated space by means of the color space conversion unit, so as to generate a quantized coefficient; and
   an encoding unit (40) that encodes the quantized coefficient generated by the quantization unit.

2. The video encoding apparatus according to claim 1, wherein the transformation matrix derivation unit derives the transformation matrix after color spatial resolutions set for the color components of an image formed of encoded pixels are adjusted such that the color spatial resolutions match a highest color spatial resolution, and wherein the color space conversion unit generates a residual signal in the uncorrelated space after the color spatial resolutions set for the color components of the residual signal are adjusted such that the color spatial resolutions match a highest color spatial resolution, following which the color space conversion unit returns the color spatial resolutions with respect to the color components of the residual signal generated in the uncorrelated space to original spatial resolutions.

3. The video encoding apparatus according to claim 1 or 2, wherein, in a case in which intra frame prediction is applied, the transformation matrix derivation unit uses, as reference pixels, the encoded pixels located neighboring a coding target block set in a frame to be subjected to the intra frame prediction,

wherein, in a case in which inter frame prediction is applied, the transformation matrix derivation unit generates a predicted image of the coding target block set in a frame to be subjected to the inter frame prediction, based on a region in a reference frame indicated by a motion vector obtained for the coding target block, and uses the pixels that form the predicted image thus generated as the reference pixels,

and wherein the transformation matrix derivation unit derives the transformation matrix using the reference pixels.

4. The video encoding apparatus according to claim 3, wherein, in a case in which the intra frame prediction is applied, the transformation matrix derivation unit uses, as the reference pixels, encoded pixels located on an upper side or otherwise a left side neighboring a coding target block set in a frame to be subjected to the intra frame prediction,

and wherein, in a case in which the inter frame prediction is applied, the transformation matrix derivation unit generates a predicted image of a coding target block set in a frame to be subjected to the inter frame prediction based on a region in a reference frame indicated by a motion vector obtained for the coding target block, uses the pixels that form the predicted image thus generated as the reference pixels, and subsamples the reference pixels such that the number of reference pixels is represented by a power of 2.

5. The video encoding apparatus according to any one of claims 1 to 4, wherein the transformation matrix derivation unit comprises:

an inverse square root calculation unit that calculates an inverse square root using fixed-point computation; and
a Jacobi calculation unit that performs calculation using the Jacobi method for calculating eigenvalues and eigenvectors using fixed-point computation.

6. The video encoding apparatus according to claim 5, wherein the inverse square root calculation unit calculates an inverse square root using fixed-point computation that is adjusted according to a bit depth of an input image that forms the video,

and wherein the Jacobi calculation unit performs calculation using the Jacobi method for calculating eigenvalues and eigenvectors using fixed-point computation that is adjusted according to the bit depth of the input image that forms the video.

7. A video decoding apparatus (BB) that decodes a video having a plurality of color components by means of intra frame prediction or otherwise inter frame prediction, the video decoding apparatus comprising:

a transformation matrix derivation unit (680A) that derives a transformation matrix using encoded pixels;
a decoding unit (610) that decodes an encoded signal;
an inverse quantization unit (620) that performs inverse quantization on the signal decoded by the decoding unit, so as to generate a residual signal; and
an inverse color space conversion unit (71 0A) that performs inverse color space conversion by applying the transformation matrix derived by the transformation matrix derivation unit to the residual signal subjected to the inverse quantization by means of the inverse quantization unit, so as to generate a residual signal in a correlated space.

8. The video decoding apparatus according to claim 7, wherein the transformation matrix derivation unit derives the transformation matrix after color spatial resolutions set for the color components of an image formed of encoded pixels are adjusted such that the color spatial resolutions match a highest color spatial resolution,

and wherein the inverse color space conversion unit generates a residual signal in the correlated space after the color spatial resolutions set for the color components of the residual signal are adjusted such that the color spatial resolutions match a highest color spatial resolution, following which the inverse color space conversion unit returns the color spatial resolutions with respect to the color components of the residual signal generated in the correlated space to original spatial resolutions.

9. The video decoding apparatus according to claim 7 or 8, wherein the transformation matrix derivation unit uses, as reference pixels, the encoded pixels located neighboring a coding target block set in a frame to be subjected to the intra frame prediction,

wherein the transformation matrix derivation unit generates a predicted image of the coding target block set in a frame to be subjected to the inter frame prediction, based on a region in a reference frame indicated by a motion vector obtained for the coding target block, and uses the pixels that form the predicted image thus generated as the reference pixels,

and wherein the transformation matrix derivation unit derives the transformation matrix using the reference pixels.

10. The video decoding apparatus according to claim 9, wherein, in a case in which the intra frame prediction is applied, the transformation matrix derivation unit uses, as the reference pixels, encoded pixels located on an upper side or otherwise a left side neighboring a coding target block set in a frame to be subjected to the intra frame prediction, and wherein, in a case in which the inter frame prediction is applied, the transformation matrix derivation unit generates a predicted image of a coding target block set in a frame to be subjected to the inter frame prediction based on a region in a reference frame indicated by a motion vector obtained for the coding target block, uses the pixels that form the predicted image thus generated as the reference pixels, and subsamples the reference pixels such that the number of reference pixels is represented by a power of 2.

11. The video decoding apparatus according to any one of claims 7 to 10, wherein the transformation matrix derivation unit comprises:

an inverse square root calculation unit that calculates an inverse square root using fixed-point computation; and a Jacobi calculation unit that performs calculation using the Jacobi method for calculating eigenvalues and eigenvectors using fixed-point computation.

12. The video decoding apparatus according to claim 11, wherein the inverse square root calculation unit calculates an inverse square root using fixed-point computation that is adjusted according to a bit depth of an input image that forms the video, and wherein the Jacobi calculation unit performs calculation using the Jacobi method for calculating eigenvalues and eigenvectors using fixed-point computation that is adjusted according to the bit depth of the input image that forms the video.

13. A video encoding method used by a video encoding apparatus (AA) that comprises a transformation matrix derivation unit (90A), a color space conversion unit (100A), a quantization unit (30), and an encoding unit (40), and that encodes a video having a plurality of color components by means of intra frame prediction or otherwise inter frame prediction, the video encoding method comprising:

first processing in which the transformation matrix derivation unit derives a transformation matrix using encoded pixels; second processing in which the color space conversion unit performs color space conversion by applying the transformation matrix derived by the transformation matrix derivation unit to a residual signal which represents a difference between an input image that forms the video and a predicted image generated by means of the inter frame prediction or otherwise the intra frame prediction, so as to generate a residual signal in an uncorrelated space; third processing in which the quantization unit quantizes the residual signal generated in an uncorrelated space by means of the color space conversion unit, so as to generate a quantized coefficient; and fourth processing in which the encoding unit encodes the quantized coefficient generated by the quantization unit.

14. A video decoding method used by a video decoding apparatus (BB) that comprises a transformation matrix derivation unit (680A), a decoding unit (610), an inverse quantization unit (620), and an inverse color space conversion unit (71 0A), and that decodes a video having a plurality of color components by means of intra frame prediction or otherwise inter frame prediction, wherein the video decoding method comprising:

first processing in which the transformation matrix derivation unit derives a transformation matrix using encoded pixels; second processing in which the decoding unit decodes an encoded signal; third processing in which the inverse quantization unit performs inverse quantization on the signal decoded by the decoding unit, so as to generate a residual signal; and fourth processing in which the inverse color space conversion unit performs inverse color space conversion by applying the transformation matrix derived by the transformation matrix derivation unit to the residual signal subjected to the inverse quantization by means of the inverse quantization unit, so as to generate a residual signal in a correlated space.

15. A computer program configured to instruct a computer to execute a video encoding method used by a video encoding apparatus (AA) that comprises a transformation matrix derivation unit (90A), a color space conversion unit (100A), a quantization unit (30), and an encoding unit (40), and that encodes a video having a plurality of color components by means of intra frame prediction or otherwise inter frame prediction, the video encoding method comprising:

first processing in which the transformation matrix derivation unit derives a transformation matrix using encoded pixels;

second processing in which the color space conversion unit performs color space conversion by applying the transformation matrix derived by the transformation matrix derivation unit to a residual signal which represents a difference between an input image that forms the video and a predicted image generated by means of the inter frame prediction or otherwise the intra frame prediction, so as to generate a residual signal in an uncorrelated space;

third processing in which the quantization unit quantizes the residual signal generated in an uncorrelated space by means of the color space conversion unit, so as to generate a quantized coefficient; and

fourth processing in which the encoding unit encodes the quantized coefficient generated by the quantization unit.

16. A computer program configured to instruct a computer to execute a video decoding method used by a video decoding apparatus (BB) that comprises a transformation matrix derivation unit (680A), a decoding unit (610), an inverse quantization unit (620), and an inverse color space conversion unit (71 0A), and that decodes a video having a plurality of color components by means of intra frame prediction or otherwise inter frame prediction, the video decoding method comprising:

first processing in which the transformation matrix derivation unit derives a transformation matrix using encoded pixels;

second processing in which the decoding unit decodes an encoded signal;

third processing in which the inverse quantization unit performs inverse quantization on the signal decoded by the decoding unit, so as to generate a residual signal; and

fourth processing in which the inverse color space conversion unit performs inverse color space conversion by applying the transformation matrix derived by the transformation matrix derivation unit to the residual signal subjected to the inverse quantization by means of the inverse quantization unit, so as to generate a residual signal in a correlated space.

EP 2 981 085 A1

FIG. 1

INPUT IMAGE a

FIRST BUFFER UNIT — 70

SECOND BUFFER UNIT — 80

IN-LOOP FILTERING UNIT — 60

INTER PREDICTION UNIT — 10

INTRA PREDICTION UNIT — 20

TRANSFORMATION MATRIX DERIVATION UNIT — 90A

COLOR SPACE CONVERSION UNIT — 100A

TRANSFORM/ QUANTIZATION UNIT — 30

ENTROPY ENCODING UNIT — 40

INVERSE COLOR SPACE CONVERSION UNIT — 130A

INVERSE QUANTIZATION/ INVERSE TRANSFORM UNIT — 50

BIT STREAM z

AA

REFERENCE
PIXEL
CANDIDATE

REFERENCE
PIXEL
CANDIDATE

PREDICTION
TARGET
PIXEL

FIG. 2

0 : DC
1 : Planar

FIG. 3

REFERENCE
BLOCK

ENCODING
TARGET BLOCK

REFERENCE
FRAME

ENCODING
TARGET FRAME

FIG. 4

FIG. 5

PRIOR ART

FIG. 6

EP 2 981 085 A1

PRIOR ART

FIG. 7

EP 2 981 085 A1

PRIOR ART

FIG. 8

BIT STREAM

DECODED IMAGE A

INVERSE TRANSFORM/ INVERSE QUANTIZATION UNIT — 620

ENTROPY DECODING UNIT — 610

INTER PREDICTION UNIT — 630

INTRA PREDICTION UNIT — 640

FIRST COLOR SPACE CONVERSION UNIT — 690

SECOND COLOR SPACE CONVERSION UNIT — 700

INVERSE COLOR SPACE CONVERSION UNIT — 710

FIRST BUFFER UNIT — 660

SECOND BUFFER UNIT — 670

IN-LOOP FILTERING UNIT — 650

TRANSFORMATION MATRIX DERIVATION UNIT — 680

QQ

A, B, C, D, E, F, G, H

PRIOR ART

FIG. 9

## INTERNATIONAL SEARCH REPORT

International application No.

PCT/JP2014/058231

**A. CLASSIFICATION OF SUBJECT MATTER**
*H04N19/12*(2014.01)i, *H04N19/136*(2014.01)i, *H04N19/176*(2014.01)i, *H04N19/61*(2014.01)i

According to International Patent Classification (IPC) or to both national classification and IPC

**B. FIELDS SEARCHED**

Minimum documentation searched (classification system followed by classification symbols)
H04N19/12, H04N19/136, H04N19/176, H04N19/61

Documentation searched other than minimum documentation to the extent that such documents are included in the fields searched
Jitsuyo Shinan Koho          1922–1996    Jitsuyo Shinan Toroku Koho    1996–2014
Kokai Jitsuyo Shinan Koho    1971–2014    Toroku Jitsuyo Shinan Koho    1994–2014

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br>A | Kei Kawamura et al., AHG7: Adaptive colour-space transformation of residual signals, Joint Collaborative Team on Video Coding (JCT-VC) of ITU-T SG 16 WP 3 and ISO/IEC JTC 1/SC 29/WG 11, JCTVC-K0193_r1, 11th Meeting: Shanghai, CN, 2012.10, pp.1-5 | 1-5,7-11, 13-16<br>6,12 |
| X<br><br>A | Kei Kawamura et al., AHG7: In-loop color-space transformation of residual signals for range extensions, 12th Meeting: Geneva, CH, JCTVC-L0371, Joint Collaborative Team on Video Coding (JCT-VC) of ITU-T SG 16 WP 3 and ISO/IEC JTC 1/SC 29/WG 11, 2013.01, pp.1-4 | 1-5,7-11, 13-16<br>6,12 |

☒ Further documents are listed in the continuation of Box C.          ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 26 May, 2014 (26.05.14) | 10 June, 2014 (10.06.14) |

| Name and mailing address of the ISA/<br>    Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2014/058231

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2009/001864 A1  (Mitsubishi Electric Corp.), 31 December 2008 (31.12.2008), paragraphs [0324] to [0327]; fig. 78, 80 & CA 2691742 A          & US 2009/0003441 A1 & US 2009/0003448 A1     & US 2009/0003449 A1 & US 2009/0003716 A1     & US 2009/0003717 A1 & US 2009/0110067 A1     & KR 10-2010-0032438 A & EP 2169961 A1           & CN 101889449 A & KR 10-2011-0061627 A  & RU 2010102711 A | 1-16 |
| A | Haruhisa KATO et al., "Adaptive Color Conversion Method based on Coding Parameters of H.264/MPEG-4 AVC", The Institute of Image Information and Television Engineers, 2012, vol.66, no.9, pages J310 to J317 | 1-16 |
| P,X | Kei KAWAMURA et al., "A Study on Adaptive Color -space Transformation of Residual Signals for 4:4:4 Chroma Format", The Institute of Image Information and Television Engineers Nenji Taikai Koen Yokoshu, 2013.08, 13-3, pages 1 to 2 | 1-16 |
| P,X | Kei Kawamura et al., In-loop Colour-Space-Transform Coding based on Integered SVD for HEVC Range Extensions, Picture Coding Symposium (PCS), 2013.12, pp.241 - 244 | 1-16 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H. KATO et al.** *Adaptive Color Conversion Method based on Coding Parameters of H.264/MPEG-4 AVC*
- **H. KATO et al.** *ADAPTIVE COLOR CONVERSION METHOD BASED ON CODING PARAMETERS OF H.264/MPEG-4 AVC*
- **WILLIAM H. PRESS ; WILLIAM T. VETTERLING ; SAUL A. TEUKOLSKY ; BRIAN P. FLANNERY.** Numerical Recipes in C. Gijutsu-Hyohron Co., Ltd, June 1993, 345-351